# EUROPÄISCHE PATENTSCHRIFT

(11) **EP 2 650 055 B1**
(45) Veröffentlichungstag und Bekanntmachung des Hinweises auf die Patenterteilung: **06.11.2019**
(21) Anmeldenummer: 13155988.2
(22) Anmeldetag: 20.02.2013
(51) Int. Cl.: G10K 11/00, G01S 7/521, G01S 15/87, G01S 15/93, G01S 15/06, B06B 1/06, G10K 9/122

(54) **Sensoranordnung und Verfahren zur Umfelderfassung eines Fahrzeugs**
Sensor assembly and method for detecting the surroundings of a vehicle
Agencement de capteurs et procédé destinés à l'enregistrement de l'environnement d'un véhicule

(30) Priorität: 12.04.2012 DE 102012205996
(43) Veröffentlichungstag der Anmeldung: 16.10.2013
(73) Patentinhaber: ROBERT BOSCH GMBH, 70442 Stuttgart (DE)
(72) Erfinder: Bartylla, David, 71229 Leonberg (DE)

(56) Entgegenhaltungen:
- EP-A1- 2 143 381
- WO-A1-2005/064589
- DE-A1- 2 125 784
- DE-A1- 4 120 681
- DE-A1-102006 005 048
- US-A1- 2009 168 603
- US-A1- 2010 202 253

## Beschreibung

### Stand der Technik

Ultraschallsensoren (USS) werden heutzutage beispielsweise zur Unterstützung des Fahrers eines Fahrzeugs bei Einparkvorgängen genutzt. Dabei wirkt der USS gleichzeitig den Sender und den Empfänger. Das ausgesendete Ultraschallsignal wird durch ein Objekt reflektiert. Die Entfernung zu dem Objekt wird anschließend über Laufzeitberechnung und Triangulation ermittelt. Bekannte Ultraschallsensoren weisen in üblicher Weise ein Piezoelement auf, das mit einer Membran des Ultraschallsensors verbunden ist. Durch entsprechende Ansteuerung des Piezoelements kann die Membran des Ultraschallsensors in Schwingung versetzt werden, um akustische Signale auszusenden. Für den Empfang der reflektierten Signale werden die Schwingungen der Membran in entsprechende Spannungssignale des Piezoelements umgewandelt.

Im Rahmen der Berechnung des Objektabstands mittels Triangulation führen Ungenauigkeiten in der Bestimmung des Einfallwinkels des reflektierten Signals zu Unsicherheiten in der berechneten Entfernung. Aus Sicherheitsgründen wird deshalb in der Regel dem Fahrer der kürzest mögliche Abstand angegeben. Eine Möglichkeit, die Genauigkeit der Winkelbestimmung zu verbessern, bietet die Nutzung eines Ultraschallarrays (USA). Dies ist eine Anordnung einer Mehrzahl von einzelnen Sensorelementen, die idealerweise in einem Abstand von Wellenlänge/2 zueinander angeordnet sind. Da ein USA einen kleineren Schalldruck erzeugt, als ein konventioneller vergleichbarer USS, wird üblicherweise die Sende- und Empfangsfunktion unterteilt. Dies bedeutet, dass zusätzlicher Montageraum nötig ist und zudem sichtbare Zusatzelemente an den Fahrzeugen installiert werden müssen.

Aus der WO 03/092915 A2 ist ein Array von Ultraschallwandlern auf einer Membran bekannt. Eine Membran, bestehend aus Diamant oder diamantähnlichem Kohlenstoff, wird mit einer Barriereschicht und einer piezoelektrischen Schicht versehen. Eine Vielzahl von räumlich getrennten ersten und zweiten Elektroden wird auf der piezoelektrischen Schicht angeordnet. Durch Anlegen einer Wechselspannung zwischen einer ersten und einer zweiten Elektrode kann die piezoelektrische Schicht zum Schwingen angeregt werden. Durch die Anordnung der Elektroden können die einzelnen Bereiche der Membran separat zum Schwingen angeregt werden, so dass auf der Membran eine Vielzahl von Ultraschallwandlern untergebracht ist.

Aus der DE 10 2004 050 794 A1 ist die Verwendung eines Ultraschallarrays zum gerichteten Senden eines Ultraschallsignals und mindestens einem Empfänger zum aufnehmen der Ultraschallechos bekannt. Das Ultraschallarray und die Ultraschallempfänger sind in der offenbarten Vorrichtung räumlich getrennt voneinander angeordnet. Über das Ultraschallarray wird in eine festgelegte Richtung ein Signal abgestrahlt. Die Richtung kann dabei verschwenkt werden, um nach und nach das Fahrzeugumfeld mit der Schallkeule abzutasten. Die Ultraschallechos werden von einem oder mehreren Empfängern aufgenommen, wobei die Empfänger nicht auf die Bestimmung der Richtung vorbereitet sind. Die Richtung wird aus der Signallaufzeit und der Abstrahlrichtung berechnet.

In der DE 10 2008 049 541 A1 wird ein Ultraschallwandler beschrieben, der aus einem Stapel von mehreren Piezokeramikschichten und Elektrodenschichten aufgebaut ist.

Aus dem Dokument US 2010/202253 A1 ist eine Ultraschallsensoranordnung zur Umfelderfassung eines Fahrzeugs bekannt. Die Ultraschallsensoranordnung weist ein Sensor-Array zum Aussenden von Ultraschallsignalen und ein Sensor-Array zum Empfangen der Ultraschallsignale auf. Das Sende-Array und das Empfangs-Array sind hierbei derart miteinander verbunden, dass sich Sende-und Empfangsbereich nicht gegenseitig überlappen. Ähnliche Sensoranordnungen werden in den Dokumenten DE 41 20 681 A1, WO 2005/064589 A1 und DE 21 25 784 A1 beschrieben.

### Offenbarung der Erfindung

Erfindungsgemäß wird eine Sensoranordnung vorgeschlagen, die eine erste Schallwandleranordnung mit zumindest einer als Membran ausgebildeten Bodenfläche umfasst, wobei die Membran geeignet ist, Schwallwellen abzustrahlen. Eine derartige Schallwandleranordnung wird auch als Biegeschwinger bezeichnet und kann Schallwellen mit einem verhältnismäßig hohen Schalldruck erzeugen, typischerweise etwa 103-109 dB, gemessen in 1 m Entfernung auf der Mittelsenkrechten. Die erfindungsgemäße Sensoranordnung weist eine zweite Schallwandleranordnung auf, umfassend eine Mehrzahl von Sensorelementen, die in einem Array angeordnet sind. Erfindungsgemäß ist vorgesehen, dass die zweite Schallwandleranordnung auf einer als Membran ausgebildeten Bodenfläche der ersten Schallwandleranordnung angeordnet ist. Eine derartige Sensoranordnung kann insbesondere als Ultraschallsensoranordnung zur Umfelderfassung eines Fahrzeugs ausgebildet sein.

Durch die Integration der beiden Schallwandlerkonzepte in ein Bauteil kann in vorteilhafter Weise durch die erste Schallwandleranordnung ein hoher Schalldruck und durch die zweite Schallwandleranordnung eine winkelabhängige Detektion der reflektierten Schallwellen erzielt werden, ohne dass zwei separate Bauteile nötig sind, die zusätzlichen Bauraum beanspruchen.

Die Sensoranordnung gemäß der Erfindung weist weiterhin den Vorteil auf, dass die Ausschwingzeit der ersten Schallwandleranordnung durch aktive Regelungen und damit eine aktive Dämpfung verkürzt werden kann. Dabei wirkt beispielsweise das anregende Piezoelement als Aktor und die zweite Schallwandleranordnung als Sensor. Somit kann auf Dämpfung durch entsprechende Materialien weitestgehend verzichtet werden. Dies bewirkt, dass wesentlich höhere Schalldrücke eingesetzt werden können, ohne den messbaren Mindestabstand vergrößern zu müssen. Zudem kann auf eine zusätzliche, als Übertrager dienende Spule verzichtet werden, die in bekannten Systemen im Empfangsbetrieb des USS zur Erzeugung einer Breitbandigkeit und der nötigen elektrischen Spannung an der Piezokeramik genutzt wird. Diese Funktionalität kann bei der erfindungsgemäßen Sensoranordnung stattdessen direkt in einer Auswerteeinheit generiert werden. Die Signale werden in der Auswerteeinheit zusammengeführt und verarbeitet. Dies ist nötig, da im Falle der nach dem Senden nicht zur Ruhe gekommenen Membran zum einen Nachschwingungen der Membran und zum anderen empfangene reflektierte Schwingungen (Echo) durch die zweite Schallwandleranordnung erkannt werden. Die Auswerteeinheit kann diese Signale separieren und getrennt auswerten.

Erfindungsgemäß umfasst die erste Schallwandleranordnung ein topfförmiges Element, das eine Bodenfläche und ein Randfläche umfasst, wobei die Bodenfläche bevorzugt als Membran ausgebildet ist. Zur Anregung einer Schwingung der Membran ist ein piezoelektrisches Element in Kontakt mit dem Membran angeordnet. Die erste Schallwandleranordnung entspricht in dieser Ausführung also einem herkömmlichen USS, so dass die derartig ausgeführte Sensoranordnung in einfacher Weise statt einem herkömmlichen USS eingebaut werden kann, ohne dass Anpassungen beispielsweise der Halterung nötig sind. Erfindungsgemäß sind die Sensorelemente der zweiten Schallwandleranordnung auf der als Membran ausgebildeten, nach außen weisenden Seite der Bodenfläche angeordnet.

Bevorzugt sind die Sensorelemente der zweiten Schallwandleranordnung als Dickenschwinger ausgebildet. Dazu kann beispielsweise mindestens eines der Sensorelemente ein piezoelektrisches Element aufweisen. Dieses umfasst ein piezoaktives, auch als piezoelektrisch aktiv bezeichnetes, Material. Derartige Materialen umfassen beispielsweise Ferroelektrete, piezoaktive Polymere oder Keramiken.

In einer bevorzugten Ausführung einer erfindungsgemäßen Sensoranordnung sind Leiterbahnen zur elektrischen Kontaktierung der Sensorelemente der zweiten Schallwandleranordnung auf der als Membran ausgebildeten Bodenfläche der ersten Schallwandleranordnung aufgebracht. Eine derartige Anordnung der Leiterbahnen ist platzsparend und beeinträchtigt die Funktion der Membran nicht.

Die Leiterbahnen werden bevorzugt auf die Membran aufgebracht, indem eine mit den Leiterbahnen bedampften Folie auf die als Membran ausgebildeten Bodenfläche der ersten Schallwandleranordnung aufgebracht wird, beispielsweise durch Kleben. Bei der Folie kann es sich insbesondere um eine Polyimidfolie oder eine Teflonfolie handeln. Derartige Folien zeichnen sich vor allem durch eine hohe Hitzebeständigkeit und gute elektrische Isolationseigenschaften aus.

Zum Schutz vor Beschädigungen sind die Sensorelemente der zweiten Schallwandleranordnung mit einer Abdeckschicht versehen, die einen Faser-Kunststoff-Verbund aufweist. Zur zusätzlichen Abdichtung und zum Schutz vor Feuchtigkeit und anderen Umwelteinflüssen kann außerdem mindestens eines der Sensorelemente der zweiten Schallwandleranordnung von einer abdichtenden Folie bedeckt sein.

Erfindungsgemäß ist weiterhin ein Verfahren zur Umfelderfassung, insbesondere eines Fahrzeugs, vorgesehen, bei dem eine erfindungsgemäße Sensoranordnung Verwendung findet. Das Verfahren sieht vor, dass die erste Schallwandleranordnung ein akustisches Signal aussendet, das an einem oder mehreren Objekten reflektiert werden kann, die zweite Schallwandleranordnung das reflektierte Signal empfängt und eine winkelabhängige Auswertung des reflektierten Signals erfolgt. Unter einer winkelabhängigen Auswertung wird insbesondere verstanden, dass durch die Anordnung der Sensorelemente der zweiten Schallwandleranordnung als Schallwandler-Array eine Position und eine Form des Objekts, an dem die Schallwellen reflektiert wurden auf der Grundlage von Zeit- und Phasendifferenzen zwischen den von den jeweiligen Sensorelementen empfangenen Schallwellen, erfasst werden können.

Das erfindungsgemäße Verfahren sieht in einer bevorzugten Ausführung vor, dass nach dem Aussenden des akustischen Signals eine Dämpfung der ersten Schallwandleranordnung erfolgt, indem eine, insbesondere gegenphasige, Ansteuerung der ersten Schallwandleranordnung vorgenommen wird. Dabei wird die zweite Schallwandleranordnung als Sensor eines Regelkreises für die Ansteuerung genutzt, um die aktuelle Phase und/oder Frequenz und/oder Amplitude der Schwingung der Membran der ersten Schallwandleranordnung zu bestimmen. Die gewonnene Information über die aktuelle Phase und/oder Frequenz und/oder Amplitude der Schwingung der Membran der ersten Schallwandleranordnung wird genutzt, um die erste Schallwandleranordnung derart anzusteuern, dass eine schnelle und effektive Dämpfung einer Nachschwingung erfolgt.

Die erfindungsgemäße Sensoranordnung findet beispielweise Verwendung in Fahrerassistenzsystemen für Fahrzeuge des täglichen Straßenverkehrs, in Fahrzeugen auf Flughäfen, in Häfen, in Lagerhallen, auf Baustellen, im Straßenbau aber auch für Raumfahrzeuge, die mit anderen Raumfahrzeugen zusammendocken oder für Maschinen und Roboter.

### Kurze Beschreibung der Zeichnungen

Figur 1 zeigt eine Ausführung einer ersten Schallwandleranordnung.
Figur 2 zeigt eine Sensoranordnung nach einem Ausführungsbeispiel der Erfindung.
Figur 3 zeigt eine beispielhafte Leiterbahnanordnung einer erfindungsgemäßen Sensoranordnung.
Figur 4 zeigt ein Ausführungsbeispiel eines Sensorelements der zweiten Schallwandleranordnung gemäß der Erfindung.

### Ausführungsformen der Erfindung

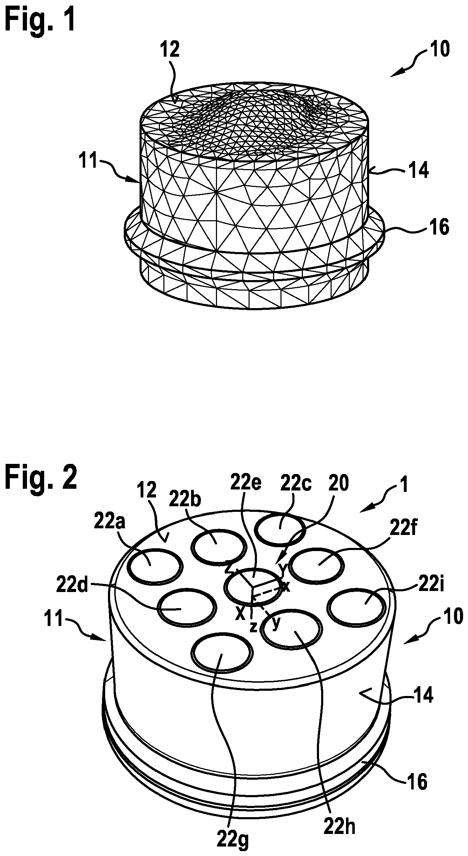

Figur 1 zeigt schematisch in perspektivischer Ansicht ein Ausführungsbeispiel für eine erste Schallwandleranordnung 10. Die erste Schallwandleranordnung 10 umfasst ein topfförmiges Element 11, das beispielsweise aus Kunststoff oder Aluminium bestehen kann. Das Element 11 umfasst eine als Membran 12 ausgebildete Bodenfläche 12 und eine umlaufende Randfläche 14. Die Bodenfläche 12 ist im Wesentlichen kreisförmig ausgebildet. Die Membran 12 kann beispielsweise einteilig mit dem Element 11 ausgebildet sein, oder als separates Teil auf der umlaufenden Randfläche 14 befestigt sein. Die Randfläche 14 weist in Richtung ihrer der Bodenfläche 12 abgewandten Kante einen umlaufenden Vorsprung 16 auf. Der Vorsprung 16 dient zur Befestigung des Elements 11 in einer Aufnahme eines nicht dargestellten Sensorgehäuses, beispielsweise an einem Kraftfahrzeug. Ein nicht dargestelltes Piezoelement ist in bekannter Weise derart an der Membran 12 angeordnet, dass es die Membran 12 zu Schwingungen anregen kann, wodurch eine Abstrahlung von Schallwellen durch die erste Schallwandleranordnung 10 erfolgt. Typischerweise liegt die Frequenz der abgestrahlten Schallwellen im Bereich von 40 bis 120 kHz, also im Ultraschallbereich. Durch den beschriebenen Aufbau strahlt die erste Schallwandleranordnung 10 in vorteilhafter Weise Schallwellen mit einem hohen Schalldruck aus. In der Darstellung in Figur 1 befindet sich die Membran 12 in Schwingung, was durch die zentrale Wölbung der Membran 12 angedeutet ist.

Eine erfindungsgemäße Sensoranordnung 1 ist in Figur 2 schematisch in perspektivischer Ansicht dargestellt. Die Sensoranordnung 1 umfasst eine erste Schallwandleranordnung 10, die gemäß der in Figur 1 dargestellten Schallwandleranordnung 10 ausgebildet ist. Gleiche Teile sind mit den gleichen Bezugszeichen versehen.

Eine zweite Schallwandleranordnung 20, umfassend neun gleichartig aufgebaute Sensorelemente 22a, 22b, 22c, 22d, 22e, 22f, 22g, 22h, 22i, ist auf der als Membran 12 ausgebildeten Bodenfläche des Elements 11 angeordnet. Die zweite Schallwandleranordnung 20 ist als Schallwandler-Array ausgebildet. Die Sensorelemente 22a - 22i sind regelmäßig in einem Gittermuster mit drei Reihen und drei Spalten mit jeweils gleichen Abständen in x- und y-Richtung zueinander angeordnet. Alternativ sind auch andere Anordnungen der Sensorelemente mit mehr oder weniger Spalten oder Reihen und/oder einer größeren oder kleineren Anzahl von Sensorelementen denkbar. Die Abstände der Sensorelemente 22a - 22i in x- und y-Richtung betragen jeweils bevorzugt die Hälfte der Wellenlänge der Schallwellen, für die die Sensoranordnung 1 ausgelegt ist. Für eine typische Frequenz von 50 kHz und die Anwendung in Luft beträgt der Abstand also etwa 3 mm, gemessen vom Mittelpunkt eines Sensorelements zum Mittelpunkt des am weitesten entfernten Sensorelements. Abweichungen führen zu Genauigkeitsverlusten bei der räumlichen Trennung von Reflexpunkten.

Alternativ zu der in Figur 2 dargestellten Anordnung der Sensorelemente 22a - 22i sind auch andere Anordnungen denkbar, beispielsweise eine kreuzförmige Anordnung oder eine Anordnung mit variierenden Abständen. Die Sensorelemente 22a - 22i weisen in dem gezeigten Beispiel eine im Wesentlichen kreisförmige Oberfläche auf. Alternativ sind auch andere Formen möglich, beispielsweise eine rechteckige, quadratische oder polygone Form.

Die Sensorelemente 22a - 22i umfassen eine piezoelektrische Schicht, die beispielsweise eine Keramik oder ein Ferroelektret umfassen kann. In bekannter Weise verursachen eingehende Schallwellen eine Dickenschwingung der piezoelektrischen Schicht des jeweiligen Sensorelements 22a - 22i. Durch den piezoelektrischen Effekt wird an jedem der Sensorelemente 22a - 22i ein Spannungssignal erzeugt. Durch die Anordnung der Sensorelemente 22a - 22i als Schallwandler-Array können eine Position und eine Form des Objekts, an dem die Schallwellen reflektiert wurden auf der Grundlage von Zeit- und Phasendifferenzen zwischen den von den jeweiligen Sensorelementen 22a - 22i empfangenen Schallwellen, erfasst werden. Die gewonnene Information kann insbesondere durch ein Fahrerassistenzsystem eines Kraftfahrzeugs weiterverarbeitet werden.

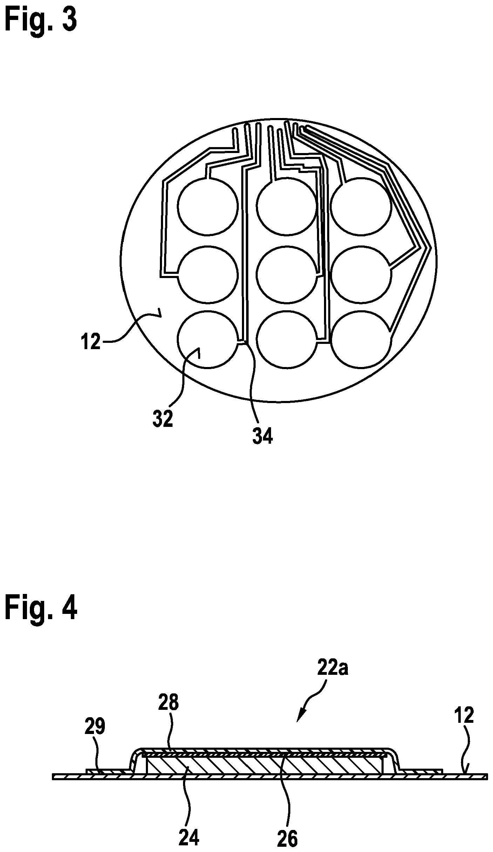

In Figur 3 sind in Draufsicht Leiterbahnen 32, 34 dargestellt, die auf die als Membran 12 ausgebildete Bodenfläche des Elements 11 der ersten Schallwandleranordnung 10 aufgebracht sind. Die Leiterbahnen umfassen Kontaktflächen 32 sowie Zuleitungen 34. Die Leiterbahnen 32, 34 dienen der elektrischen Kontaktierung der Sensorelemente 22a - 22i der zweiten Schallwandleranordnung 20. Jedem der Sensorelemente 22a - 22i ist eine Kontaktfläche 32 zugeordnet, die in ihrer Fläche und Form im Wesentlichen der Form des Sensorelements 22 entspricht. Spannungssignale, die durch eingehende Schallwellen mittels der Sensorelemente 22a - 22i erzeugt werden, werden durch die Zuleitungen 34 an eine nicht dargestellte Auswerteeinheit geleitet, in der die Position und eine Form des Objekts, an dem die Schallwellen reflektiert wurden, bestimmt werden kann. Die Leiterbahnen 32, 34 sind in diesem Beispiel durch Aufbringen einer mit den Leiterbahnen 32, 34 bedampften Folie, insbesondere einer Polyimidfolie oder einer Teflonfolie, auf die Bodenfläche 12 aufgebracht. Alternativ sind auch andere Aufbringungsmöglichkeiten für die Leiterbahnen 32, 43 denkbar, wie beispielsweise Bedrucken mittels Siebdruck mit einem leitfähigen Klebstoff oder Aufdampfen oder durch chemische Abscheidung.

Da die Sensorelemente 22a - 22i in diesem Beispiel den gleichen Aufbau aufweisen, wird nachstehend im Bezug auf Figur 4 einzig das Sensorelement 22a als Beispiel beschrieben. Das Sensorelement 22a weist ein piezoelektrisches Element 24 auf, das auf der als Membran 12 ausgebildeten Bodenfläche des topfförmigen Elements 11 der ersten Schallwandleranordnung 10 angeordnet ist. Das piezoelektrische Element 24 umfasst beispielsweise eine piezoelektrisch aktive Keramik oder ein piezoelektrisch aktives Polymer oder ein Ferroelektret, auch als Piezoelektret bezeichnet. Die der Bodenfläche 12 abgewandte Oberfläche des piezoelektrischen Elements 24 ist mit einer Schutzschicht 26 bedeckt. Die Schutzschicht 26 umfasst beispielsweise einen Faser-Kunststoff-Verbund. Die Schutzschicht dient dazu, das piezoelektrische Element 24 mechanisch zu festigen und vor Beschädigung zu schützen. Die Anordnung aus piezolektrischem Element 24 und Schutzschicht 26 ist von einer abdichtenden Folie 28 bedeckt, die haubenartig ausgebildet ist und die Anordnung aus piezolektrischem Element 24 und Schutzschicht 26 abschließt. Die Folie 28 weist dazu einen Randabschnitt 29 auf, der mit der Bodenfläche 12 verbunden ist, beispielsweise durch Kleben. Damit ist das Sensorelement 22a vor Umwelteinflüssen, wie beispielsweise Feuchtigkeit geschützt und damit für den Einsatz an einem Kraftfahrzeug geeignet. Es ist möglich, jedes einzelne der Sensorelemente 22a - 22i mit einer abdichtenden Folie 28 zu versehen. Alternativ kann auch eine abdichtende Folie vorgesehen sein, mehrere oder alle der Sensorelemente 22a - 22i bedeckt. Die Folie 28 kann alternativ auch das gesamte Element 11 überspannen.

Wir die beschriebene Sensoranordnung 1 zur Umfelderfassung eines Fahrzeugs eingesetzt, so wird mittels der ersten Schallwandleranordnung 10 ein akustisches Signal erzeugt. Durch die Ausbildung der ersten Schallwandleranordnung 10 mit einer topfförmigen Membran kann ein akustisches Signal mit hohem Schalldruck von ca. 103-109 dB, gemessen in 1 m Entfernung auf der Mittelsenkrechten, erzeugt werden. Das akustische Signal kann von einem Objekt im Umfeld des Fahrzeugs reflektiert werden. Das reflektierte Signal wird von der zweiten Schallwandleranordnung 20 detektiert, indem die piezoelektrischen Elemente 24 der Sensorelemente 22a - 22i durch das reflektierte Signal zu Dickenschwingungen angeregt werden und in bekannter Weise mittels des piezoelektrischen Effekts ein Spannungssignal erzeugen. Durch die Anordnung der Sensorelemente 22a-22i als Schallwandler-Array können eine Position und eine Form des Objekts, an dem die Schallwellen reflektiert wurden auf der Grundlage von Zeit- und Phasendifferenzen zwischen den von den jeweiligen Sensorelementen 22a-22i empfangenen Schallwellen, erfasst werden.

Da eine zuverlässige Detektion des empfangenen akustischen Signals erst nach einer gewissen Ausschwingzeit der Sensoranordnung 1 erfolgen kann, ist vorgesehen die Sensoranordnung 1 nach dem Aussenden des akustischen Signals zu dämpfen. Durch die Dämpfung wird die Zeitdauer, die mindestens zwischen dem Aussenden des akustischen Signals durch die erste Schallwandleranordnung 10 und der Detektion des reflektierten akustischen Signals durch die zweite Schallwandleranordnung 20 vergehen muss, um eine zuverlässige Messung zu gewährleisten, reduziert. Wir die erfindungsgemäße Sensoranordnung 1 zur Objektdetektion in einem Fahr- oder Parkassistenzsystem eines Kraftfahrzeugs eingesetzt, können durch diese Reduktion der sogenannten Totzeit auch Objekte mit einem geringem Abstand erkannt werden.

Die Dämpfung der ersten Schallwandleranordnung 10 erfolgt durch aktive Ansteuerung des Piezoelements der ersten Schallwandleranordnung, gegenphasig zur Schwingung der Membran 11. Die zweite Schallwandleranordnung 20 dient dabei als Sensor für die Schwingung der Membran 11 und es kann ein Regelkreis gebildet werden, der eine schnelle und effiziente Dämpfung der Membran ermöglicht. Es ist damit möglich, den Einsatz dämpfender Materialien, z.B. geschäumte Kunststoffe, zu reduzieren oder gänzlich darauf zu verzichten.

## Patentansprüche

1. Sensoranordnung (1), insbesondere Ultraschallsensoranordnung zur Umfelderfassung eines Fahrzeugs, umfassend
- eine erste Schallwandleranordnung (10), umfassend ein topfförmiges Element (11) mit einer Randfläche (14) und einer der als Membran (12) ausgebildeten Bodenfläche, wobei die Membran (12) dazu ausgebildet ist, Schwallwellen abzustrahlen, wobei zur Anregung einer Schwingung der Membran (12) ein piezoelektrisches Element in Kontakt mit der Membran (12) angeordnet ist,
- eine zweite Schallwandleranordnung (20), umfassend eine Mehrzahl von Sensorelementen (22a - 22i), die als Array, insbesondere als Ultraschallarray, ausgebildet ist,
wobei die Sensorelemente (22a - 22i) der zweiten Schallwandleranordnung (20) auf der nach außen weisenden Seite der als Membran (12) ausgebildeten Bodenfläche angeordnet sind, **dadurch gekennzeichnet, dass**
die erste Schallwandleranordnung (10) dazu ausgebildet ist, ein akustisches Signal auszusenden, das an einem oder mehreren Objekten reflektiert werden kann, und die zweite Schallwandleranordnung (20) dazu ausgebildet ist, das reflektierte Signal zu empfangen.

2. Sensoranordnung (1) nach Anspruch 1, **dadurch gekennzeichnet, dass** die Sensorelemente (22a - 22i) der zweiten Schallwandleranordnung (20) als Dickenschwinger ausgebildet sind.

3. Sensoranordnung nach Anspruch 2, **dadurch gekennzeichnet, dass** mindestens eines der Sensorelemente (22a - 22i) ein piezoelektrisches Element (24) aufweist, das ein piezoaktives Material umfasst, insbesondere ein Ferroelektret, ein Polymer oder eine Keramik.

4. Sensoranordnung (1) nach einem der vorhergehenden Ansprüche, **dadurch gekennzeichnet, dass** Leiterbahnen (32, 34) zur elektrischen Kontaktierung der Sensorelemente (22a - 22i) der zweiten Schallwandleranordnung (20) auf der als Membran ausgebildeten Bodenfläche (12) der ersten Schallwandleranordnung (10) aufgebracht sind.

5. Sensoranordnung (1) nach Anspruch 4, **dadurch gekennzeichnet, dass** die Leiterbahnen (32, 34) durch Aufbringen einer mit den Leiterbahnen (32, 34) bedampften Folie, insbesondere einer oder einer Teflonfolie, auf die als Membran ausgebildeten Bodenfläche (12) der ersten Schallwandleranordung (10) aufgebracht sind.

6. Sensoranordnung (1) nach einem der vorhergehenden Ansprüche, **dadurch gekennzeichnet, dass** die Sensorelemente (22a - 22i) der zweiten Schallwandleranordnung (20) eine Abdeckschicht (26) aufweisen, wobei die Abdeckschicht (26) insbesondere einen Faser-Kunststoff-Verbund aufweist.

7. Sensoranordnung (1) nach einem der vorhergehenden Ansprüche, **dadurch gekennzeichnet, dass** mindestens eines der Sensorelemente (22a - 22i) der zweiten Schallwandleranordnung (20) von einer abdichtenden Folie (28) bedeckt ist.

8. Verfahren zur Umfelderfassung, insbesondere eines Fahrzeugs, unter Verwendung einer Sensoranordnung (1) nach einem der Ansprüche 1 bis 7, **dadurch gekennzeichnet, dass**
- die erste Schallwandleranordnung (10) ein akustisches Signal aussendet, das an einem oder mehreren Objekten reflektiert werden kann,
- die zweite Schallwandleranordnung (20) das reflektierte Signal empfängt,
- eine winkelabhängige Auswertung des reflektierten Signals erfolgt.

9. Verfahren nach Anspruch 8, **dadurch gekennzeichnet, dass** eine Dämpfung der ersten Schallwandleranordnung (10) erfolgt, indem eine, insbesondere gegenphasige, Ansteuerung der ersten Schallwandleranordnung erfolgt, wobei die zweite Schallwandleranordnung (20) als Sensor eines Regelkreises für die Ansteuerung genutzt wird.

## Claims

1. Sensor arrangement (1), in particular an ultrasonic sensor arrangement for environment detection by a vehicle, comprising
- a first sound transducer arrangement (10), comprising a pot-shaped element (11) having a peripheral surface (14) and a base area in the form of a diaphragm (12), wherein the diaphragm (12) is designed to emit sound-waves, wherein a piezoelectric element is arranged in contact with the diaphragm (12) in order to stimulate an oscillation of the diaphragm (12),
- a second sound transducer arrangement (20), comprising a plurality of sensor elements 22a-22i), which is in the form of an array, in particular in the form of an ultrasonic array,
wherein the sensor elements (22a-22i) of the second sound transducer arrangement (20) are arranged on the outwardly pointing side of the base area that is in the form of a diaphragm (12), **characterized in that**
the first sound transducer arrangement (10) is designed to transmit an acoustic signal that can be reflected from one or more objects, and the second sound transducer arrangement (20) is designed to receive the reflected signal.

2. Sensor arrangement (1) according to Claim 1, **characterized in that** the sensor elements (22a-22i) of the second sound transducer arrangement (20) are in the form of thickness oscillators.

3. Sensor arrangement (1) according to Claim 2, **characterized in that** at least one of the sensor elements (22a-22i) has a piezoelectric element (24) that comprises a piezoactive material, in particular a ferroelectret, a polymer or a ceramic.

4. Sensor arrangement (1) according to one of the preceding claims, **characterized in that** conductor tracks (32, 34) have been put onto the base area (12) of the first sound transducer arrangement (10) that is in the form of a diaphragm in order to make electrical contact with the sensor elements (22a-22i) of the second sound transducer arrangement (20).

5. Sensor arrangement (1) according to Claim 4, **characterized in that** the conductor tracks (32, 34) have been put onto the base area (12) of the first sound transducer arrangement (10) that is in the form of a diaphragm by applying a film, in particular a or a Teflon film, vapour-deposited with the conductor tracks (32, 34).

6. Sensor arrangement (1) according to one of the preceding claims, **characterized in that** the sensor elements (22a-22i) of the second sound transducer arrangement (20) have a top layer (26), wherein the top layer (26) features in particular a fibre/plastic composite.

7. Sensor arrangement (1) according to one of the preceding claims, **characterized in that** at least one of the sensor elements (22a-22i) of the second sound transducer arrangement (20) is covered by a sealing film (28).

8. Method for environment detection, in particular by a vehicle, using a sensor arrangement (1) according to one of Claims 1 to 7, **characterized in that**
- the first sound transducer arrangement (10) transmits an acoustic signal that can be reflected from one or more objects,
- the second sound transducer arrangement (20) receives the reflected signal,
- an angle-dependent evaluation of the reflected signal takes place.

9. Method according to Claim 8, **characterized in that** a damping of the first sound transducer arrangement (10) takes place by virtue of an, in particular antiphase, actuation of the first sound transducer arrangement taking place, wherein the second sound transducer arrangement (20) is used as a sensor of a control loop for the actuation.

## Revendications

1. Arrangement détecteur (1), notamment arrangement détecteur ultrasonore destiné à la détection de l'environnement d'un véhicule, comprenant
- un premier arrangement transducteur acoustique (10), comprenant un élément en forme de pot (11) ayant une surface de bord (14) et une surface de fond réalisée sous la forme d'une membrane (12), la membrane (12) étant configurée pour rayonner des ondes acoustiques, un élément piézoélectrique étant disposé en contact avec la membrane (12) en vue d'exciter une oscillation de la membrane (12),
- un deuxième arrangement transducteur acoustique (20), comprenant une pluralité d'éléments capteurs (22a - 22i) qui sont configurés en réseau, notamment sous la forme d'un réseau ultrasonore,
les éléments capteurs (22a - 22i) du deuxième arrangement transducteur acoustique (20) étant disposés sur le côté dirigé vers l'extérieur de la surface de fond réalisée sous la forme d'une membrane (12),
**caractérisé en ce que**
le premier arrangement transducteur acoustique (10) est configuré pour émettre un signal acoustique qui peut être réfléchi au niveau d'un ou plusieurs objets, et le deuxième arrangement transducteur acoustique (20) est configuré pour recevoir le signal réfléchi.

2. Arrangement détecteur (1) selon la revendication 1, **caractérisé en ce que** les éléments capteurs (22a - 22i) du deuxième arrangement transducteur acoustique (20) sont réalisés sous la forme d'un oscillateur d'épaisseur.

3. Arrangement détecteur selon la revendication 2, **caractérisé en ce qu'**au moins l'un des éléments capteurs (22a - 22i) possède un élément piézoélectrique (24), qui comporte un matériau piézoactif, notamment un ferroélectret, un polymère ou une céramique.

4. Arrangement détecteur (1) selon l'une des revendications précédentes, **caractérisé en ce que** des pistes conductrices (32, 34) destinées à l'établissement du contact avec les éléments capteurs (22a - 22i) du deuxième arrangement transducteur acoustique (20) sont appliquées sur la surface de fond (12) réalisée sous la forme d'une membrane du premier arrangement transducteur acoustique (10).

5. Arrangement détecteur (1) selon la revendication 4, **caractérisé en ce que** les pistes conductrices (32, 34) sont appliquées sur la surface de fond (12) réalisée sous la forme d'une membrane du premier arrangement transducteur acoustique (10) par application d'un film métallisé sous vide avec les pistes conductrices (32, 34) en particulier d'un ou d'un film téflon.

6. Arrangement détecteur (1) selon l'une des revendications précédentes, **caractérisé en ce que** les éléments capteurs (22a - 22i) du deuxième arrangement transducteur acoustique (20) possèdent une couche de recouvrement (26), la couche de recouvrement (26) possédant notamment un composite de fibres et matière plastique.

7. Arrangement détecteur (1) selon l'une des revendications précédentes, **caractérisé en ce qu'**au moins l'un des éléments capteurs (22a - 22i) du deuxième arrangement transducteur acoustique (20) est recouvert d'un film d'étanchéité (28).

8. Procédé de détection de l'environnement, notamment d'un véhicule, en utilisant un arrangement détecteur (1) selon l'une des revendications 1 à 7, **caractérisé en ce que**
- le premier arrangement transducteur acoustique (10) émet un signal acoustique qui peut être réfléchi au niveau d'un ou plusieurs objets,
- le deuxième arrangement transducteur acoustique (20) reçoit le signal réfléchi,
- une interprétation du signal réfléchi en fonction de l'angle est effectuée.

9. Procédé selon la revendication 8, **caractérisé en ce qu'**une atténuation du premier arrangement transducteur acoustique (10) est effectuée en effectuant une excitation notamment en opposition de phase du premier arrangement transducteur acoustique, le deuxième arrangement transducteur acoustique (20) étant utilisé comme capteur d'un circuit de régulation pour l'excitation.
